# EUROPEAN PATENT APPLICATION

(11) **EP 4 759 166 A1**
(43) Date of publication of application: **17.06.2026**
(21) Application number: 24853639.3
(22) Date of filing: 07.08.2024
(51) Int. Cl.: A24F 40/57

(54) **HEATING CONTROL METHOD AND APPARATUS, AND ATOMIZER**

(30) Priority: 11.08.2023 CN 202311013929
(71) Applicant: Smoore International Holdings Limited, Grand Cayman, KY1-1111 (KY)
(72) Inventor: LIU, Zengri, Shenzhen, Guangdong 518102 (CN); LV, Shaobo, Shenzhen, Guangdong 518102 (CN); TAN, Hua, Shenzhen, Guangdong 518102 (CN)
(74) Representative: Winter, Brandl - Partnerschaft mbB
(86) International application number: PCT/CN2024/110516
(87) International publication number: WO 2025/036228

(57) **Abstract**

The present disclosure provides a heating control method and device, and an atomizer, belonging to the technical field of atomizer. The method includes: controlling, in response to a puff trigger signal, a heating assembly to heat up to a target temperature range, and controlling an aerosol-forming substrate to move toward a region to be heated by a first target length, where the aerosol-forming substrate in the region to be heated is atomized within the target temperature range and forms aerosol; and controlling, after a preset condition is satisfied, the heating assembly to cool down to below the target temperature range, and controlling the aerosol-forming substrate to continue to move toward the region to be heated by a second target length, where the first target length and the second target length are each approximately equal to a length of the region to be heated. The technical solution can prevent the heating assembly from heating the same area of the aerosol-forming substrate for a long time, thereby avoiding a burnt taste during puffing. In addition, the afterheat of the heating assembly can be used to perform temperature holding on the aerosol-forming substrate, so that the heating time can be reduced in the next puff, thereby increasing the aerosol generation speed.

## Description

The present disclosure claims priority to Chinese Patent Application No. 202311013929.3, filed with the China National Intellectual Property Administration on August 11, 2023 and entitled "HEATING CONTROL METHOD AND DEVICE, AND ATOMIZER", which is incorporated herein by reference in its entirety.

### TECHNICAL FIELD

The present disclosure relates to the technical field of atomizer, and in particular, to a heating control method and device, and an atomizer.

### BACKGROUND

An electronic atomization device is disclosed in the prior art. The device is provided with a conveyor belt. The conveyor belt is provided with a blade-shaped or rod-shaped array. Each array unit is loaded with an aerosol-forming substrate, which can provide one or more puffs. During use, the electronic atomization device drives the conveyor belt to transport the aerosol-forming substrate to a heating device for heating, so as to atomize the aerosol-forming substrate.

The working mode of the electronic atomization device in the prior art is as follows: The conveyor belt transports an array of aerosol-forming substrate to a heating assembly and then stops. Upon completion of heating the array of aerosol-forming substrate, the conveyor belt resumes operation. In this manner, the aerosol generation speed is low, consequently affecting user experience.

### SUMMARY

The present disclosure provides a heating control method and device, and an atomizer, to solve the problem of low aerosol generation speed of the existing aerosol-forming substrate.

According to a first aspect, an embodiment of the present disclosure provides a heating control method, applied to an atomizer. The atomizer includes at least an aerosol-forming substrate and a heating assembly. The heating assembly is configured to heat the aerosol-forming substrate located in a region to be heated. A total length of the aerosol-forming substrate is greater than a length of the region to be heated. The method includes:
controlling, in response to a puff trigger signal, the heating assembly to heat up to a target temperature range, and controlling the aerosol-forming substrate to move toward the region to be heated by a first target length, where the aerosol-forming substrate in the region to be heated is atomized within the target temperature range and forms aerosol; and
controlling, after a preset condition is satisfied, the heating assembly to cool down to below the target temperature range, and controlling the aerosol-forming substrate to continue to move toward the region to be heated by a second target length, where the first target length and the second target length are each approximately equal to the length of the region to be heated.

In a possible solution of the first aspect, before the controlling, in response to a puff trigger signal, the heating assembly to heat up to a target temperature range, the method further includes: heating the heating assembly, and controlling a temperature of the heating assembly to be within a holding temperature range, a temperature lower limit of the holding temperature range being at least higher than an ambient temperature.

In another possible solution of the first aspect, after the controlling a temperature of the heating assembly to be within a holding temperature range, the method further includes: obtaining a holding duration of the heating assembly within the holding temperature range, and comparing the holding duration with a preset holding threshold duration; and stopping, if the holding duration is greater than or equal to the holding threshold duration, heating the heating assembly.

In still another possible solution of the first aspect, before the controlling, in response to a puff trigger signal, the heating assembly to heat up to a target temperature range, the method further includes: controlling the aerosol-forming substrate to move toward the region to be heated by a third target length, the third target length being greater than or equal to the length of the region to be heated.

In yet another possible solution of the first aspect, the controlling, after a preset condition is satisfied, the heating assembly to cool down to below the target temperature range includes: controlling, upon an end of puffing or upon determining that a puffing process is in a final stage, the heating assembly to cool down to below the target temperature range, the puffing process being divided into at least an initial stage and the final stage according to a puffing duration.

In yet another possible solution of the first aspect, the determining that a puffing process is in a final stage includes: obtaining the puffing duration, and comparing the puffing duration with a preset duration threshold; and determining, if the puffing duration is greater than the preset duration threshold, that the puffing process is currently in the final stage.

In yet another possible solution of the first aspect, after the controlling the aerosol-forming substrate to continue to move toward the region to be heated by a second target length, the method further includes: controlling the heating assembly to heat up, so as to perform temperature holding on the aerosol-forming substrate moved into the region to be heated.

In yet another possible solution of the first aspect, the method further includes: controlling, in response to a power-off trigger signal, the heating assembly to stop heating, and controlling an atomizer to be powered off.

According to a second aspect, an embodiment of the present disclosure provides a heating control device, including:
a heat-up module, configured to control, in response to a puff trigger signal, a heating assembly to heat up to a target temperature range, and control an aerosol-forming substrate to move toward a region to be heated by a first target length, where the aerosol-forming substrate in the region to be heated is atomized within the target temperature range and forms aerosol; and
a cool-down module, configured to control, after a preset condition is satisfied, the heating assembly to cool down to below the target temperature range, and control the aerosol-forming substrate to continue to move toward the region to be heated by a second target length, the sum of the first target length and the second target length being greater than a length of the region to be heated.

According to a third aspect, an embodiment of the present disclosure provides an electronic atomizer, including: a control device, an aerosol-forming substrate, and a heating assembly. The heating assembly is configured to heat the aerosol-forming substrate located in a region to be heated. The total length of the aerosol-forming substrate is greater than the length of the region to be heated. The control device is configured to perform the method described above.

According to the heating control method and device, and the atomizer provided in the embodiments of the present disclosure, the aerosol-forming substrate is controlled to move in each puff, and the total length of the movement is greater than the length of the heating region of the heating assembly. This can avoid heating the same area of the aerosol-forming substrate for a long time, thereby avoiding a burnt taste. In addition, the afterheat of the heating assembly can be used to perform temperature holding on the aerosol-forming substrate, so that the heating time can be reduced in the next puff, thereby increasing the aerosol generation speed of the aerosol-forming substrate.

### BRIEF DESCRIPTION OF THE DRAWINGS

FIG. 1A is a schematic structural diagram of an atomizer according to an embodiment of the present disclosure;
FIG. 1B is a schematic diagram of a scenario of heating an aerosol-forming substrate according to an embodiment of the present disclosure;
FIG. 2 is a schematic flowchart of a heating control method according to an embodiment of the present application;
FIG. 3 is a schematic flowchart of a heating control method according to another embodiment of the present application;
FIG. 4 is a schematic flowchart of a heating control method according to still another embodiment of the present application;
FIG. 5 is a schematic diagram of heating control timing according to an embodiment of the present disclosure;
FIG. 6 is a schematic structural diagram of a heating control device according to an embodiment of this application; and
FIG. 7 is a schematic structural diagram of an electronic atomizer according to an embodiment of this application.

### DETAILED DESCRIPTION

To make the objectives, technical solutions, and advantages of embodiments of the present disclosure clearer, the following clearly and completely describes the technical solutions in the embodiments of the present disclosure with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

Currently, when heating an aerosol-forming substrate, an atomizer usually controls a heating assembly to generate heat. After the temperature of the heating assembly increases to a target temperature, the aerosol-forming substrate on the heating assembly starts to be atomized by heat, so as to generate aerosol for a user to inhale. However, in this manner, the aerosol-forming substrate tends to produce a burnt taste as it is heated for a long time, consequently resulting in a poor puffing effect. In addition, in practical use, the heating assembly usually starts to heat the aerosol-forming substrate only when the atomizer detects a user's puff. This requires heating the aerosol-forming substrate from the ambient temperature to the atomization temperature, a process that takes considerable time. As a result, the aerosol generation speed of the aerosol-forming substrate is low, adversely affecting the user's experience.

In view of the above problem, embodiments of the present disclosure provide a heating control method and device, and an atomizer. The aerosol-forming substrate is controlled to move by a first target length and a second target length in each puff, and the first target length and the second target length are each approximately equal to a length of the heating region of the heating assembly. This can avoid heating the same area of the aerosol-forming substrate for a long time, thereby avoiding a burnt taste and improving the puffing effect. Moreover, by strategically controlling the temperature of the heating assembly at different stages, the size of the heating assembly can be reduced, the heat generation efficiency of the heating assembly can be improved, and the heating time can be reduced, without affecting the heating effect of the aerosol-forming substrate. This achieves rapid aerosol generation.

The following describes technical solutions of the present disclosure in detail with reference to specific embodiments. It should be noted that the following specific embodiments may be combined with each other, and the same or similar concepts or processes may not be described repeatedly in some embodiments.

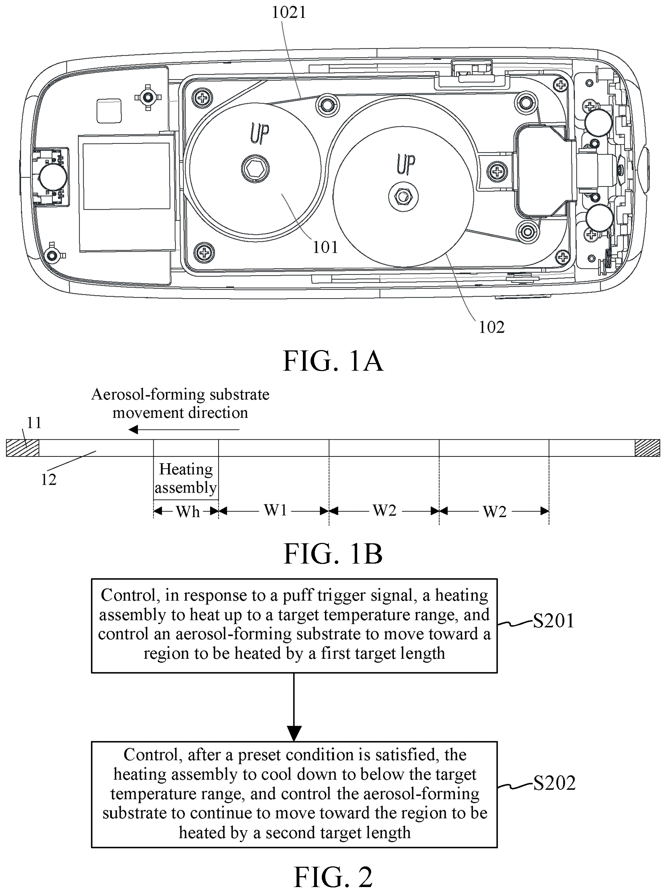

FIG. 1A is a schematic structural diagram of an atomizer according to an embodiment of the present disclosure. As shown in FIG. 1A, the atomizer includes two turntables (a first turntable 101 and a second turntable 102). An elongated conveyor belt 1021 is arranged between the two turntables, and the conveyor belt 1021 may be provided with an aerosol-forming substrate (the aerosol-forming substrate may be divided into a plurality of elongated grains that are sequentially arranged on the conveyor belt 1021, and the length of each grain of the aerosol-forming substrate may be approximately equal to or greater than the length of a region to be heated). A heating assembly may be disposed in a region close to the conveyor belt 1021 (for example, a heating assembly is fixedly disposed against the lower side of the conveyor belt 1021, and in this way, a region to be heated may be formed on the upper side of the heating assembly). When the second turntable 102 rotates, the aerosol-forming substrate on the conveyor belt 1021 is driven to move toward the region to be heated. In this way, a part of the aerosol-forming substrate enters the region to be heated. When the heating assembly heats the region to be heated and the temperature reaches the atomization temperature, the aerosol-forming substrate in the region to be heated is atomized to form aerosol for the user to inhale. Moreover, while the second turntable 102 rotates, the first turntable 101 may also rotate at the same rotational speed, so as to release the aerosol-forming substrate that is not heated. That is, the aerosol-forming substrate on the conveyor belt entrained in the first turntable 101 is not heated, and the aerosol-forming substrate on the conveyor belt entrained in the second turntable 102 is heated and used by the user.

FIG. 1B is a schematic diagram of a scenario of heating an aerosol-forming substrate according to an embodiment of the present disclosure. As shown in FIG. 1B, the aerosol-forming substrate includes at least a heat conducting layer 11 and an aerosol generating layer 12. By controlling the heating assembly to heat up, the temperature of aerosol-forming substrate can be increased to the atomization temperature, resulting in aerosol generation. The length Wh of the heating assembly may be set according to the actual situation. If the size of the heating assembly is smaller, the heat generating efficiency is higher, so that the heating time of the aerosol-forming substrate can be reduced. In addition, during the process of heating the aerosol-forming substrate, the aerosol-forming substrate may move toward a direction, which can prevent a particular grain of the aerosol-forming substrate from being heated for a long time, thereby avoiding the burnt taste.

FIG. 2 is a schematic flowchart of a heating control method according to an embodiment of the present disclosure. The method may be applied to an atomizer for performing heating control on a heating assembly in the atomizer. The atomizer further includes a movable aerosol-forming substrate. Exemplarily, referring to FIG. 1A and FIG. 1B, the aerosol-forming substrate may be of an elongated shape. During movement of the aerosol-forming substrate, a part of the aerosol-forming substrate is located in the region to be heated. The aerosol-forming substrate located in the region to be heated may be heated by controlling the heating assembly to heat up. Referring to FIG. 1B, the length of the region to be heated may be the length Wh of the heating assembly, and the total length of the aerosol-forming substrate is greater than the length Wh. As shown in FIG. 2, the method includes the following steps:
Step S201: Control, in response to a puff trigger signal, the heating assembly to heat up to a target temperature range, and control the aerosol-forming substrate to move toward the region to be heated by a first target length, where the aerosol-forming substrate in the region to be heated is atomized within the target temperature range and forms aerosol.

In this embodiment, the puff trigger signal indicates that the user is about to start puffing. To ensure the puffing effect, the heating assembly needs to heat and atomize the aerosol-forming substrate to form aerosol. The aerosol-forming substrate may be elongated, and the heating assembly may be disposed close to the aerosol-forming substrate (for example, disposed below the aerosol-forming substrate, which can avoid hindering the aerosol generated after the aerosol-forming substrate is atomized because the aerosol naturally rises). Exemplarily, still referring to FIG. 1B, the heating assembly may be disposed below the elongated aerosol-forming substrate, and a region to be heated may be formed above the heating assembly. The length of the region to be heated may be the same as the length of the heating assembly. After the heating assembly heats up to the target temperature range, the aerosol-forming substrate located in the region to be heated is heated and atomized to form the aerosol.

The movement of the aerosol-forming substrate may be controlled by providing a conveyor belt. Specifically, the conveyor belt may be provided with an array of aerosol-forming substrate, which can provide one or more puffs for the user. When the user puffs, the atomizer controls the movement of the aerosol-forming substrate on the conveyor belt by driving the conveyor belt.

In this embodiment, the first target length may be set according to the actual situation. For example, referring to FIG. 1B, the first target length may be set according to the length Wh of the heating assembly. Exemplarily, the first target length may be the length Wh of the heating assembly, so as to ensure that the aerosol-forming substrate is fully used, or may be less than the length Wh of the heating assembly, so that the amount of aerosol generated by the aerosol-forming substrate during the heating process is relatively small. Specifically, the first target length may be adjusted according to the use requirement of the user.

Step S202: Control, after a preset condition is satisfied, the heating assembly to cool down to below the target temperature range, and control the aerosol-forming substrate to continue to move toward the region to be heated by a second target length, where the first target length and the second target length are each approximately equal to the length of the region to be heated. Certainly, according to different scenarios, the first target length and the second target length may be greater than the length of the region to be heated or shorter than the length of the region to be heated.

In this embodiment, after the puff trigger signal triggers a response, the user usually starts to puff. The preset condition may be set. During the puffing, if the preset condition is satisfied, the heating assembly stops heating up, so as to cool down to below the target temperature range. Exemplarily, the preset condition may be a puffing duration, a puffing end trigger signal, an atomizer power-off signal, or the like.

The "below the target temperature range" may be further divided into two temperature ranges according to the actual situation, for example, a holding temperature range and an ambient temperature range. When the heating assembly cools down to the holding temperature range, the aerosol-forming substrate in the region to be heated can be held. In this way, when the user continues to puff next time, because the aerosol-forming substrate is in a holding state (that is, higher than the ambient temperature but lower than the atomization temperature), the heating assembly requires less time to heat the aerosol-forming substrate to the target temperature range. In this way, the aerosol generation speed can be increased, thereby ensuring the puffing effect.

In addition, if the heating assembly cools down to the ambient temperature range (for example, the heating assembly cools down to the ambient temperature range in response to the atomizer power-off signal), the aerosol-forming substrate in the region to be heated is no longer heated. This is mainly applicable to a case in which the user does not continue to puff subsequently in a short time, so as to prevent the heating assembly from being in the holding state for a long time, thereby reducing energy consumption.

In this embodiment, there are two purposes of controlling the aerosol-forming substrate to move toward the region to be heated by the second target length. On one hand, the afterheat of the heating assembly can be used to continue to heat the aerosol-forming substrate in the region to be heated, thereby helping to perform temperature holding on the aerosol-forming substrate in the region to be heated. On the other hand, the aerosol-forming substrate originally located in the region to be heated can be updated and replaced, to avoid heating the aerosol-forming substrate originally located in the region to be heated for a long time, thereby avoiding the burnt taste and improving the puffing effect.

In this embodiment, the aerosol-forming substrate may be divided into a plurality of units, which are then are arranged in an array on the conveyor belt. In this way, it is more convenient to control the conveyor belt to move. When transported by the conveyor belt, the aerosol-forming substrate moves by only one unit each time. Exemplarily, the length of each unit may be the length Wh of the heating assembly. That is, the first target length is one unit length, and the second target length is also one unit length.

In this embodiment of the present disclosure, the aerosol-forming substrate heated is movable, which can ensure that the aerosol-forming substrate heated in each puff is fresh and avoid heating the same region of the aerosol-forming substrate for a long time, thereby avoiding the burnt taste. In addition, with the movable aerosol-forming substrate, the aerosol-forming substrate that is newly moved to the region to be heated can be held by using the afterheat of the heating assembly, so that the heating time for the next puff can be reduced, thereby achieving rapid aerosol generation and improving the puffing effect. In addition, heating the movable aerosol-forming substrate enables the miniaturization of the heating assembly, so that the heating assembly has smaller size, less self-heat absorption and high heat-up speed, and can increase the heating area of the aerosol-forming substrate during each puff, thereby increasing the aerosol release amount.

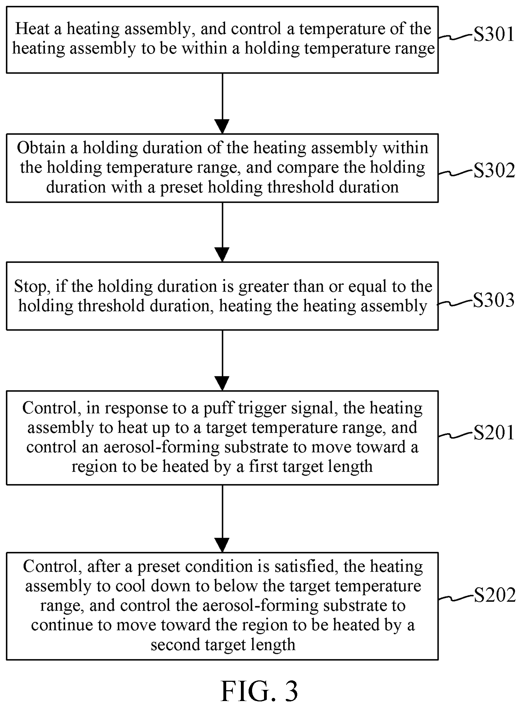

In some embodiments, FIG. 3 is a schematic flowchart of a heating control method according to another embodiment of the present disclosure. As shown in FIG. 3, the method may further include the following steps: Step S301: Heat a heating assembly, and control a temperature of the heating assembly to be within a holding temperature range, a temperature lower limit of the holding temperature range being at least higher than an ambient temperature. Step S302: Obtain a holding duration of the heating assembly within the holding temperature range, and compare the holding duration with a preset holding threshold duration. Step S303: Stop, if the holding duration is greater than or equal to the holding threshold duration, heating the heating assembly. Step S201: Control, in response to a puff trigger signal, the heating assembly to heat up to a target temperature range, and control the aerosol-forming substrate to move toward the region to be heated by a first target length, where the aerosol-forming substrate in the region to be heated is atomized within the target temperature range and forms aerosol. Step S202: Control, after detecting that a preset condition is satisfied, the heating assembly to cool down to below the target temperature range, and control the aerosol-forming substrate to continue to move toward the region to be heated by a second target length, the sum of the first target length and the second target length being greater than the length of the region to be heated.

In this embodiment, before puffing starts (that is, in response to the puff trigger signal), the heating assembly may be first controlled to heat up to the holding temperature range. After the heating assembly heats up to the holding temperature range, the aerosol-forming substrate in the region to be heated may be heated slowly to finally reach the temperature consistent with that of the heating assembly. In this way, in response to the puff trigger signal, after the heating assembly continues to heat up to the target temperature range, the heating time of the aerosol-forming substrate in the region to be heated can be reduced, thereby achieving rapid atomization of the aerosol-forming substrate and increasing the aerosol generation amount during puffing.

The holding temperature range is a temperature range that includes a lower limit and an upper limit. It can be understood that, the lower limit of the holding temperature range is higher than the ambient temperature, and the upper limit of the holding temperature range is lower than the lower limit of the target temperature range. In this way, the aerosol-forming substrate can be held.

Further, in an implementation, the method may further include step S302 and step S303. After the heating assembly is heated to the holding temperature range to preheat and perform temperature holding on the aerosol-forming substrate in the region to be heated, preparation for the user to start to puff is made at this time. If the user does not puff within a holding threshold duration, the heating assembly needs to exit from this preparation state, such that the heating assembly stops heating and no longer holds the aerosol-forming substrate in the region to be heated. This can prevent the heating assembly from being within the holding temperature range for a long time, thereby improving the service life and reducing energy consumption.

After exiting from the preparation state, the atomizer may be powered off. After the atomizer is powered off, the atomizer enters an unheatable state, with a distinct indication to differentiate this state from the power-on state (including but not limited to motor vibration, and display changes).

According to the embodiment of the present disclosure, by controlling the heating assembly to be within the holding temperature range, the initial temperatures of the aerosol-forming substrate and the heating assembly upon a cold start of the atomizer can be increased, so that the atomizer can quickly enter the working state after the cold start, thereby achieving rapid heating and aerosol generation and improving the puffing effect.

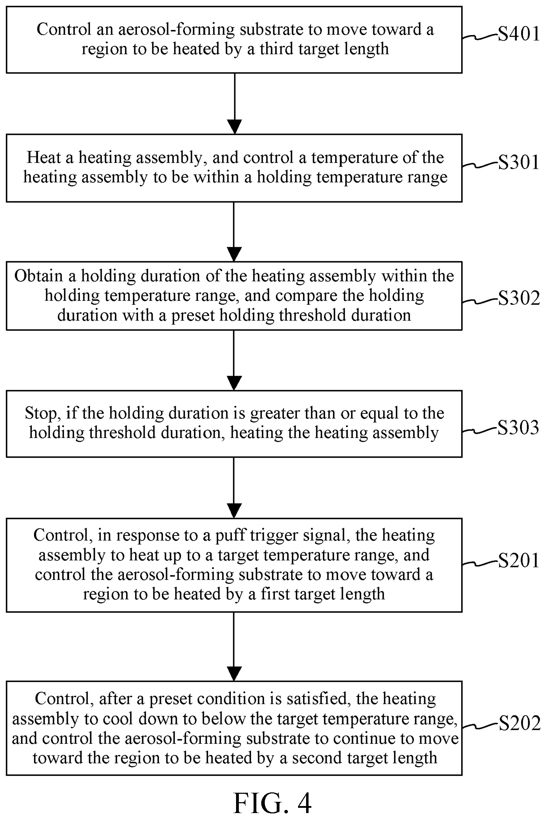

Based on the above embodiments, in some embodiments, FIG. 4 is a schematic flowchart of a heating control method according to still another embodiment of the present disclosure. As shown in FIG. 4, the method differs from FIG. 3 in the above embodiment in that the method further includes step S401: Control the aerosol-forming substrate to move toward the region to be heated by a third target length, the third target length being greater than or equal to the length of the region to be heated.

In this embodiment, before the first puff of the atomizer, a part of the aerosol-forming substrate needs to be transported to the region to be heated, that is, the movable aerosol-forming substrate is moved toward the region to be heated, to ensure that the region to be heated has the aerosol-forming substrate that can be heated, thereby avoiding dry heating of the heating assembly. Exemplarily, if the length of the region to be heated is the length Wh of the heating assembly, the length by which the aerosol-forming substrate is moved needs to be controlled to be WO (WO is greater than or equal to Wh).

The aerosol-forming substrate may be placed on a conveyor belt, and the conveyor belt is driven to move the aerosol-forming substrate. In addition, the transportation speed of the conveyor belt may be fixed, and then the movement length of the aerosol-forming substrate is controlled through the driving duration.

In this embodiment, before puffing, not only the heating assembly, but also the aerosol-forming substrate needs to be preheated. By transporting a part of the aerosol-forming substrate into a region to be heated, the aerosol-forming substrate can also enter a preheat state, so that the heat-up time can be reduced during the puffing, and the aerosol-forming substrate can generate aerosol rapidly, thereby improving the puffing effect.

In some embodiments, step S202 may be specifically implemented by using the following step: controlling, upon an end of puffing or upon determining that a puffing process is in a final stage, the heating assembly to cool down to below the target temperature range, the puffing process being divided into at least an initial stage and the final stage according to a puffing duration.

In this embodiment, when a corresponding trigger signal for the end of puffing is provided, for example, when the user stops puffing, atmospheric pressure changes, which represents the end of puffing; and for another example, when an upper time limit for puffing is reached, the end of puffing is triggered, so that the atomizer detects the end of puffing.

In this embodiment, a standard average puffing duration may be determined according to the duration of each puff by the user. For example, if the puffing durations of three puffs by the user are respectively 2.5 seconds, 3 seconds, and 3.5 seconds, the average puffing duration is 3 seconds. Therefore, based on the average puffing duration, each puffing process of the user may be divided into an initial stage and a final stage. Exemplarily, the initial stage is the first 1.5 seconds from the start of puffing, and the final stage is from the 1.5^{th} seconds to the 3^{th} seconds. When the atomizer detects the end of puffing or that the puffing process is in the final stage, if the user does not take a next puff within a short time, the heating assembly may not heat up any more, so as to slowly cool down. After a period of time, the heating assembly is cooled to below the target temperature range.

Further, when the atomizer detects the end of puffing or that the puffing process is in the final stage, the heating power of the heating assembly may be reduced, and the heating assembly is allowed to continue generating heat, but the temperature of the heating assembly is no longer higher than the target temperature range, for example, the temperature of the heating assembly is allowed to be within the holding temperature range. When the temperature of the heating assembly is within the holding temperature range, the aerosol-forming substrate in the region to be heated may be held. If the user continues to take a next puff within a short time, the aerosol-forming substrate can generate aerosol rapidly.

Further, in some implementations, the puffing duration may be obtained, and the puffing duration may be compared with a preset duration threshold; and if the puffing duration is greater than the preset duration threshold, it may be determined that the puffing process is currently in the final stage.

It is mentioned above that the average of the total puffing duration may be determined according to the total puffing duration from the start to the end of puffing of the user each time. In this embodiment, timing may be started upon response to the puff trigger signal, the timing duration is used as the puffing duration, and then the preset duration threshold is set to determine whether the puffing process is currently in the final stage.

Exemplarily, in an example where the average of the total puffing duration is 3 seconds, the preset duration threshold may be set to 1.5 seconds. Timing starts upon response to the puff trigger signal. If the timing duration (that is, the puffing duration mentioned in this embodiment) exceeds 1.5 seconds, it indicates that the puffing process is currently in the final stage.

In this embodiment of the present disclosure, at the end of the puffing or in the final stage of the puffing process, the heating assembly is controlled to cool down to below the target temperature range, and the aerosol-forming substrate is controlled to continue to move toward the region to be heated by the second target length, which can ensure that the aerosol-forming substrate in each puff is fresh and unheated after the first puff, thereby improving the puffing effect.

In other embodiments, the method may further include the following steps: controlling the heating assembly to heat up, so as to perform temperature holding on the aerosol-forming substrate moved into the region to be heated.

In this embodiment, after the aerosol-forming substrate continues to move toward the region to be heated by the second target length, if the user still needs to continue to puff within a short time, the heating assembly may not cool down to the ambient temperature, i.e., may continue to heat up, so that the aerosol-forming substrate can be held within the holding temperature range. In this way, the heat-up time can be reduced for the next puff, thereby achieving rapid aerosol generation.

Based on the above embodiments, in response to a power-off trigger signal, the heating assembly may further be controlled to stop heating, and the atomizer may be controlled to be powered off.

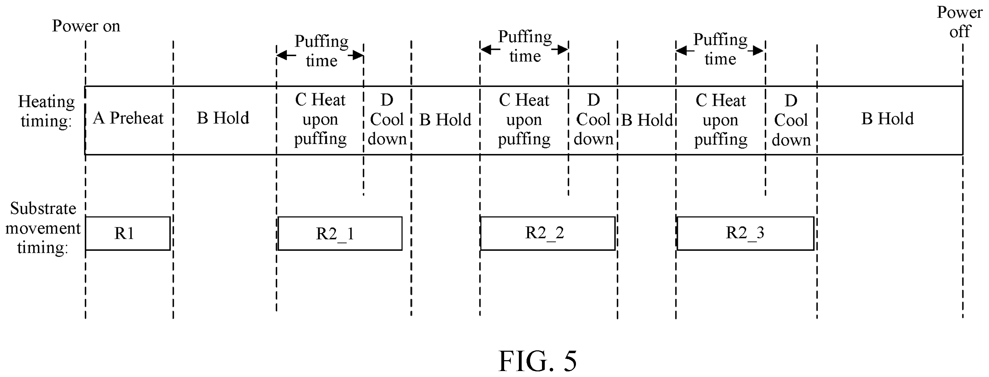

In this embodiment, the atomizer may enter the power-off state in response to the power-off trigger signal at each different time point. The power-off trigger signal may include, but is not limited to, an action such as button pressing and cover sliding. After the atomizer is powered off, the atomizer enters an unheatable state, with a distinct indication to differentiate this state from the original state (including but not limited to motor vibration, and display changes). Exemplarily, FIG. 5 is a schematic diagram of heating control timing according to an embodiment of the present disclosure. As shown in FIG. 5, during the working process of the atomizer, the heating assembly includes a total of 4 different heating stages, that is, A preheat, B hold, C heat upon puffing, and D cool down. In different stages, the heating temperature of the heating assembly is different. For example, in the B hold stage, the temperature of the heating assembly is maintained within the holding temperature range, and in the C heat upon puffing stage, the temperature of the heating assembly is maintained within the target temperature range. When the heating assembly is in different heating stages, the aerosol-forming substrate moves with corresponding timing. In an example where the length R1 is used as the length of the heating assembly, the length R2_1, the length R2_2, and the length R2_3 are each greater than the length R1. The atomizer further includes two actions, namely, power-on and power-off. Usually, the heat stage of the heating assembly is between the power-on and power-off actions. Exemplarily, a complete puffing process of the user may include power-on, A preheat, B hold, C heat upon puffing, D cool down, and power-off. When the user needs to take multiple puffs, the sequence of the stages may be power-on→A→B→C→D→B→C→D→B→C→D→B→...power-off.

In this embodiment, the power-on means that after the atomizer in a power-off state is powered on upon detecting a trigger signal (including but not limited to an action such as button pressing and cover sliding). The atomizer that is powered on has a distinct indication to differentiate this state from the power-off state (including but not limited to motor vibration, and display changes).

In a complete puffing process of the user, the A preheat stage is optional but not essential, but the movement "R1" of the aerosol-forming substrate in this stage is essential. If there is a significant temperature surging process before "B hold", it is considered that "A preheat" exists.

"B hold" means that the heating assembly is maintained within a temperature range that is significantly higher than the ambient temperature after power-on, but the temperature does not allow the aerosol generating layer to generate a significant aerosol. "B hold", which is the preheat of "C heat upon puffing", reduces the heat-up time of "C heat upon puffing".

"D cool down" refers to control of cooling down or natural cooling performed after the end of puffing (including, but not limited to, recovery of an atmospheric pressure signal and reaching of the upper limit time of puffing) or in the final stage of puffing. If cooling down is already performed in the "C heat upon puffing" stage, "D cool down" may not be an essential stage in the complete puffing process of the user.

After "power-off", the atomizer enters an unheatable state, with a distinct indication to differentiate this state from the original state (including but not limited to motor vibration, and display changes). "Power-off" is triggered when one of the following two cases occurs:
(1) In any stage among "A preheat, B hold, C heat upon puffing, and D cool down", a forced power-off signal is generated (including but not limited to an action such as button pressing and cover sliding).
(2) In the "B hold" stage, the "C heat upon puffing" stage is not triggered for a duration that reaches a set upper limit (for example, 60 seconds).

The movement "R1" of the aerosol-forming substrate usually occurs in the "A preheat" stage. Optionally, the movement may also occur after "power-off" is triggered, but in either case, the movement needs to be completed before the first "B hold" stage after "power-on". In addition, the total distance of movement of the aerosol-forming substrate during each puff is as follows: The total distance of movement during each puff is R2_1, R2_2, R2_3, ..., and each of R2_1, R2_2, R2_3 is greater than Wh. In this way, the heating area of the aerosol-forming substrate during each puff is greater than the area of the heating assembly, thereby improving the aerosol generating amount for each puff.

For example, it is assumed that the length of the heating assembly is 5 mm, each time the user takes a puff, the distance of movement of the aerosol-forming substrate is 5 mm, and the aerosol-forming substrate is heated by the heating element all the time during the movement process. Specifically, the following two steps may be included:
1. After the user powers on the atomizer, the heating assembly starts to heat up, and the aerosol-forming substrate starts to move. At this time, the heating temperature of the heating assembly is lower than the atomization temperature of the aerosol-forming substrate, and the distance of movement of the aerosol-forming substrate is roughly equal to the length of the heating assembly in the moving direction of the aerosol-forming substrate (hereinafter collectively referred to as one unit). If it is detected that the user starts to puff, in the first half stage of one puff, the temperature of the heating assembly is increased to the temperature at which the aerosol-forming substrate is atomized, and the aerosol-forming substrate is moved by one unit. In the second half of the puff, the temperature of the heating assembly is reduced to below the temperature at which the aerosol-forming substrate is atomized, and the aerosol-forming substrate is moved by one unit.
2. In the puffing process, assuming that the user spends 3 seconds for one puff, the aerosol-forming substrate is moved by 5 mm for the first 1.5 seconds of the heating process, and moved by 5 mm for the last 1.5 seconds of the heating process, that is, the aerosol-forming substrate is moved twice for each puff. The temperature of the heating assembly in the movement process of the first 1.5 seconds is higher than that in the movement process of the last 1.5 seconds. In the movement process of the first 1.5 seconds, the temperature of the heating assembly should be sufficient for the aerosol-forming substrate to be atomized, and in the movement process of the last 1.5 seconds, the temperature of the heating assembly should be lower than the atomization temperature, that is, the holding temperature, of the aerosol-forming substrate. In the movement of the last 1.5 seconds, the afterheat of the first 1.5 seconds is used to preheat the aerosol-forming substrate for the next puff, so that the aerosol-forming substrate can generate aerosol more rapidly in the next puff.

According to this embodiment of the present disclosure, with the stage "B hold", the initial temperature of the "C heat upon puffing" stage can be increased, thereby reducing the time for reaching the temperature at which the aerosol can be released, and achieving rapid aerosol generation. In addition, by heating the movable atomization temperature, when the heating assembly is miniaturized (for less self-heat absorption and rapid heat-up), the heating area of the aerosol-forming substrate per unit puff is increased, thereby increasing the aerosol generating amount, and the burnt taste caused by long-time heating in the same area can also be avoided. Moreover, the "A preheat" stage can increase the initial temperatures of the aerosol-forming substrate and the heating element upon a cold start of the atomizer can be increased, so that the aerosol-forming substrate can be heated and generate aerosol rapidly after the cold start of the atomizer. However, the "movement R1 of the aerosol-forming substrate" can ensure that the aerosol-forming substrate in each puff is fresh and unheated. Finally, "D cool down" can ensure that when the aerosol-forming substrate moves to the next puff, the aerosol-forming substrate in the next puff is not heated in advance, thereby avoiding causing loss of the aerosol.

The following describes the device embodiment of this application, which can be used for executing the method embodiment of this application. For details not disclosed in the device embodiment of this application, reference may be made to the method embodiment of this application.

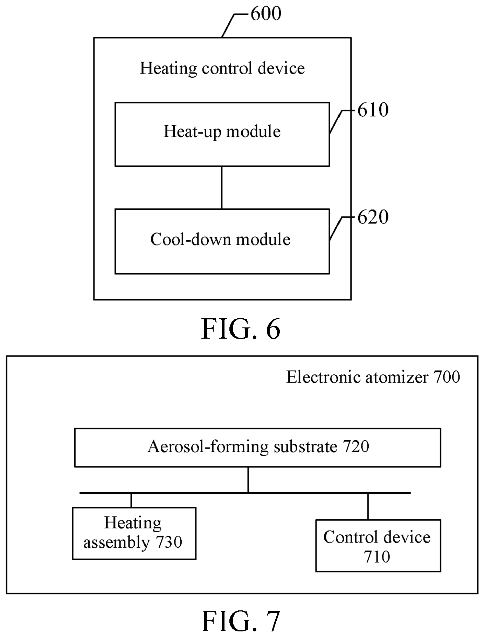

FIG. 6 is a schematic structural diagram of a heating control device according to an embodiment of the present disclosure. As shown in FIG. 6, the heating control device 600 includes a heat-up module 610 and a cool-down module 620. The heat-up module 610 is configured to control, in response to a puff trigger signal, a heating assembly to heat up to a target temperature range, and control an aerosol-forming substrate to move toward a region to be heated by a first target length, where the aerosol-forming substrate in the region to be heated is atomized within the target temperature range and forms aerosol. The cool-down module 620 is configured to control, after a preset condition is satisfied, the heating assembly to cool down to below the target temperature range, and control the aerosol-forming substrate to continue to move toward the region to be heated by a second target length, where the first target length and the second target length are each approximately equal to the length of the region to be heated.

Optionally, the device further includes a holding control module, configured to heat the heating assembly, and control a temperature of the heating assembly to be within a holding temperature range. A temperature lower limit of the holding temperature range is at least higher than an ambient temperature.

Optionally, the device further includes a heating stop control module, configured to obtain a holding duration of the heating assembly within the holding temperature range, and compare the holding duration with a preset holding threshold duration; and stop, if the holding duration is greater than or equal to the holding threshold duration, heating the heating assembly.

Optionally, the device further includes a movement control module, configured to control the aerosol-forming substrate to move toward the region to be heated by a third target length. The third target length being greater than or equal to the length of the region to be heated.

Optionally, the cool-down module may be specifically configured to: control, upon an end of puffing or upon determining that a puffing process is in a final stage, the heating assembly to cool down to below the target temperature range. The puffing process is divided into at least an initial stage and the final stage according to a puffing duration.

Optionally, the cool-down module may be specifically configured to: obtain the puffing duration, and compare the puffing duration with a preset duration threshold; and determine, if the puffing duration is greater than the preset duration threshold, that the puffing process is currently in the final stage.

Optionally, the device further includes an assembly heating control module, configured to control the heating assembly to heat up, so as to perform temperature holding on the aerosol-forming substrate moved into the region to be heated.

Optionally, the device further includes a power-off control module, configured to control, in response to a power-off trigger signal, the heating assembly to stop heating, and control the atomizer to be powered off.

The device provided in this embodiment of the present disclosure may be configured to perform the method in the above embodiment. Their implementation principles and technical effects are similar. Details are not described herein again.

It should be noted that, it should be understood that division of the modules of the above device is merely division of logical functions, and during actual implementation, all or some of the modules may be integrated into a physical entity, or may be physically separated. In addition, these modules may all be implemented in a form of invoking software by using a processing element; or may all be implemented in a form of hardware. Alternatively, some modules may be implemented in a form of invoking software by a processing element, and some modules may be implemented in a form of hardware. For example, the heat-up module may be a separately disposed processing element, or may be integrated in a chip of the above device. In addition, the heat-up module may be stored in a memory of the above device in a form of program code, and invoked by a processing element of the above device to perform a function of the heat-up module. The implementation of the other modules is similar. In addition, all or some of these modules may be integrated, or may be independently implemented. The processing element here may be an integrated circuit with a signal processing capability. In the implementation process, the steps of the above method or the above modules may be completed by using a hardware integrated logic circuit in a processor element or an instruction in a form of software.

FIG. 7 is a schematic structural diagram of an electronic atomizer according to an embodiment of this application. As shown in FIG. 7, the electronic atomizer 700 includes at least a control device 710, an aerosol-forming substrate 720, and a heating assembly 730. The heating assembly is configured to heat the aerosol-forming substrate located in a region to be heated. The total length of the aerosol-forming substrate is greater than the length of the region to be heated. The control device is configured to perform the method described above.

Specifically, the control device may be a central processing unit, or an application specific integrated circuit (ASIC), or one or more integrated circuits configured to implement the embodiments of the present disclosure. One or more processors included in the electronic atomizer may be the same type of processors, such as one or more CPU, or different types of processors, such as one or more CPUs and one or more ASICs.

In the present disclosure, "at least one" means one or more, and "a plurality of" means two or more. The term "and/or" describes an association relationship between associated objects, and indicates that three relationships may exist. For example, A and/or B may indicate that: only A exists, both A and B exist, and only B exists, where A and B may be singular or plural. The character "/" generally indicates an "or" relationship between the associated objects. In a formula, the character "/" indicates a relationship of "divide" between the associated objects. "At least one of the following items" or a similar expression means any combination of these items, including a single item or any combination of a plurality of items. For example, at least one of a, b, or c may represent a, b, c, a-b, a-c, b-c, or a-b-c, where a, b, and c may be singular or plural.

It can be understood that various numbers in the embodiments of the present disclosure are merely used for distinguishing the numbers for ease of description, but are not intended to limit the scope of the embodiments of the present disclosure. In the embodiments of the present disclosure, sequence numbers of the above processes do not imply an execution sequence. The execution sequence of the processes should be determined according to functions and internal logic of the processes, and should not be construed as any limitation to an implementation process of the embodiments of the present disclosure.

Finally, it should be noted that the above embodiments are merely used for describing the technical solutions of the present disclosure, but are not intended to limit the present disclosure. Although the present disclosure is described in detail with reference to the above embodiments, it should be appreciated by a person skilled in the art that, modifications may still be made to the technical solutions recorded in the above embodiments, or equivalent replacements may be made to the part of all of the technical features; and these modifications or replacements will not cause the essence of corresponding technical solutions to depart from the scope of the technical solutions in the embodiments of the present disclosure.

## Claims

1. A heating control method, applied to an atomizer, wherein the atomizer comprises at least an aerosol-forming substrate and a heating assembly, the heating assembly is configured to heat the aerosol-forming substrate located in a region to be heated, and a total length of the aerosol-forming substrate is greater than a length of the region to be heated, the method comprising:
controlling, in response to a puff trigger signal, the heating assembly to heat up to a target temperature range, and controlling the aerosol-forming substrate to move toward the region to be heated by a first target length, wherein the aerosol-forming substrate in the region to be heated is atomized within the target temperature range and forms aerosol; and
controlling, after a preset condition is satisfied, the heating assembly to cool down to below the target temperature range, and controlling the aerosol-forming substrate to continue to move toward the region to be heated by a second target length, wherein the first target length and the second target length are each approximately equal to the length of the region to be heated.

2. The method of claim 1, wherein before the controlling, in response to a puff trigger signal, the heating assembly to heat up to a target temperature range, the method further comprises:
heating the heating assembly, and controlling a temperature of the heating assembly to be within a holding temperature range, a temperature lower limit of the holding temperature range being at least higher than an ambient temperature.

3. The method of claim 2, wherein after the controlling a temperature of the heating assembly to be within a holding temperature range, the method further comprises:
obtaining a holding duration of the heating assembly within the holding temperature range, and comparing the holding duration with a preset holding threshold duration; and
stopping, if the holding duration is greater than or equal to the holding threshold duration, heating the heating assembly.

4. The method of claim 1, wherein before the controlling, in response to a puff trigger signal, the heating assembly to heat up to a target temperature range, the method further comprises:
controlling the aerosol-forming substrate to move toward the region to be heated by a third target length, the third target length being greater than or equal to the length of the region to be heated.

5. The method of claim 1, wherein the controlling, after a preset condition is satisfied, the heating assembly to cool down to below the target temperature range comprises:
controlling, upon an end of puffing or upon determining that a puffing process is in a final stage, the heating assembly to cool down to below the target temperature range, the puffing process being divided into at least an initial stage and the final stage according to a puffing duration.

6. The method of claim 5, wherein the determining that a puffing process is in a final stage comprises:
obtaining the puffing duration, and comparing the puffing duration with a preset duration threshold; and
determining, if the puffing duration is greater than the preset duration threshold, that the puffing process is currently in the final stage.

7. The method of claim 1, wherein after the controlling the aerosol-forming substrate to continue to move toward the region to be heated by a second target length, the method further comprises:
controlling the heating assembly to heat up, so as to perform temperature holding on the aerosol-forming substrate moved into the region to be heated.

8. The method of claim 1, wherein the method further comprises:
controlling, in response to a power-off trigger signal, the heating assembly to stop heating, and controlling an atomizer to be powered off.

9. A heating control device, comprising:
a heat-up module, configured to control, in response to a puff trigger signal, a heating assembly to heat up to a target temperature range, and control an aerosol-forming substrate to move toward a region to be heated by a first target length, wherein the aerosol-forming substrate in the region to be heated is atomized within the target temperature range and forms aerosol; and
a cool-down module, configured to control, after a preset condition is satisfied, the heating assembly to cool down to below the target temperature range, and control the aerosol-forming substrate to continue to move toward the region to be heated by a second target length, wherein the first target length and the second target length are each approximately equal to a length of the region to be heated.

10. The device of claim 9, wherein the device further comprises: a holding control module, configured to heat the heating assembly, and control a temperature of the heating assembly to be within a holding temperature range, a temperature lower limit of the holding temperature range being at least higher than an ambient temperature.

11. The device of claim 10, wherein the device further comprises: a heating stop control module, configured to obtain a holding duration of the heating assembly within the holding temperature range, and compare the holding duration with a preset holding threshold duration; and stop, if the holding duration is greater than or equal to the holding threshold duration, heating the heating assembly.

12. The device of claim 9, wherein the device further comprises: a movement control module, configured to control the aerosol-forming substrate to move toward the region to be heated by a third target length, the third target length being greater than or equal to the length of the region to be heated.

13. The device of claim 9, wherein the cool-down module is specifically configured to:
control, upon an end of puffing or upon determining that a puffing process is in a final stage, the heating assembly to cool down to below the target temperature range, the puffing process being divided into at least an initial stage and the final stage according to a puffing duration.

14. The device of claim 13, wherein the cool-down module is specifically configured to:
obtain the puffing duration, and compare the puffing duration with a preset duration threshold; and
determine, if the puffing duration is greater than the preset duration threshold, that the puffing process is currently in the final stage.

15. The device of claim 9, wherein the device further comprises: an assembly heating control module, configured to control the heating assembly to heat up, so as to perform temperature holding on the aerosol-forming substrate moved into the region to be heated.

16. The device of claim 9, wherein the device further comprises: a power-off control module, configured to control, in response to a power-off trigger signal, the heating assembly to stop heating, and control the atomizer to be powered off.

17. An electronic atomizer, comprising: a control device, an aerosol-forming substrate, and a heating assembly, wherein the heating assembly is configured to heat the aerosol-forming substrate located in a region to be heated, a total length of the aerosol-forming substrate is greater than a length of the region to be heated, and the control device is configured to perform the method of any one of claims 1 to 8.
